(19) Europäisches Patentamt

European Patent Office

Office européen des brevets

(11) **EP 0 953 785 B1**

(12) **EUROPÄISCHE PATENTSCHRIFT**

(45) Veröffentlichungstag und Bekanntmachung des Hinweises auf die Patenterteilung:
**26.03.2003 Patentblatt 2003/13**

(51) Int Cl.$^7$: **F16D 55/48**

(21) Anmeldenummer: **99107398.2**

(22) Anmeldetag: **26.04.1999**

(54) **Elektromechanische Bremse mit Selbstverstärkung**

Self-energising electromechanical brake

Frein électromécanique à autoserrage

(84) Benannte Vertragsstaaten:
**DE FR GB IT**

(30) Priorität: **30.04.1998 DE 19819564**

(43) Veröffentlichungstag der Anmeldung:
**03.11.1999 Patentblatt 1999/44**

(73) Patentinhaber: **Deutsches Zentrum für Luft- und Raumfahrt e.V.**
**51147 Köln (DE)**

(72) Erfinder:
• **Dietrich, Johannes**
 **82205 Gilching (DE)**
• **Gombert, Bernd**
 **82284 Grafrath (DE)**

• **Grebenstein, Markus**
 **81541 München (DE)**

(74) Vertreter: **Beyer, Andreas, Dr.**
 **Wuesthoff & Wuesthoff,**
 **Patent- und Rechtsanwälte,**
 **Schweigerstrasse 2**
 **81541 München (DE)**

(56) Entgegenhaltungen:
**EP-A- 0 773 386      WO-A-98/14715**
**US-A- 4 381 049      US-A- 5 368 137**

• **PATENT ABSTRACTS OF JAPAN vol. 007, no. 269 (M-259), 30. November 1983 (1983-11-30) & JP 58 146723 A (SHINKO DENKI KK), 1. September 1983 (1983-09-01)**

## Beschreibung

Die vorliegende Erfindung betrifft eine elektromechanische Bremse, insbesondere für Fahrzeuge, gemäß dem Oberbegriff des Patentanspruchs 1. Eine solche Bremse ist aus der WO 98/14715 bekannt.

Elektromechanische Bremsen an sich sind bekannt. Die DE 195 43 098 C2 beschreibt eine als Scheibenbremse ausgebildete, elektrisch betätigbare Fahrzeugbremse, deren Bremsbeläge mit Hilfe eines Elektromotors gegen die Bremsscheibe gepreßt werden können. Der Elektromotor überträgt seine Betätigungskraft über eine sogenannte Planeten-Wälz-Gewindespindel auf einen axial verschiebbar gelagerten Kolben, der mit dem Bremsbelag zusammenwirkt.

Aus der WO 96/03301 ist eine weitere, ebenfalls als Scheibenbremse ausgebildete, elektrisch betätigbare Fahrzeugbremse bekannt, deren Bremsbeläge wiederum mittels eines als Aktuator dienenden Elektromotors an die Bremsscheibe andrückbar sind. Der Elektromotor umschließt ein Spindelgetriebe und ist in Verschieberichtung der Bremsbeläge mittels eines Spindelelementes, das von unterschiedlicher Ausführung sein kann, mit einem auf einen Bremsbelag einwirkenden, axial verschiebbaren Kolben verbunden. Optional ist in der dieser Druckschrift die Verwendung eines zusätzlichen Getriebes zur Drehmoment- und Drehzahlwandlung vorgesehen.

Ein Hauptproblem herkömmlicher Bremsen mit einem elektrischen Aktuator liegt in der hohen Aktuatorkraft, die zum Erzielen einer ausreichenden Bremswirkung aufgebracht werden muß. Die erforderliche, hohe Aktuatorkraft und der daraus resultierende, hohe Leistungsbedarf des Aktuators bringt es mit sich, daß als Antriebsquelle sehr große, drehmomentstarke und damit auch schwere und teure Antriebseinheiten, die üblicherweise Elektromotoren sind, eingesetzt werden müssen. Dies hat dazu geführt, daß elektromechanische Bremsen beispielsweise als Fahrzeugbremsen bisher keine Verbreitung gefunden haben.

Der Erfindung liegt die Aufgabe zugrunde, eine elektromechanische Bremse bereitzustellen, deren elektrischer Aktuator eine gegenüber herkömmlichen Bremsen dieser Bauart erheblich geringere Betätigungskraft aufbringen muß, so daß die erfindungsgemäße Bremse beispielsweise für einen Einsatz in Kraftfahrzeugen oder auch in Schienenfahrzeugen geeignet ist. Die erfindungsgemäße Bremse soll darüber hinaus ein sehr gutes Regelverhalten aufweisen, wobei in diesem Zusammenhang insbesondere eine hohe Dynamik wichtig ist.

Diese Aufgabe wird ausgehend von einer elektromechanischen Bremse der eingangs genannten Art erfindungsgemäß dadurch gelöst, daß der Keil sich gleitend oder rollend an einem zugehörigen Widerlager abstützt, derart, daß eine mittels des elektrischen Aktuators in die Selbstverstärkungsanordnung eingeleitete Eingangskraft $F_{Ein}$ und eine sich bei einer Bremsung ergebende Auflagerkraft $F_B$ auf voneinander verschiedene Flächen des Keils wirken.

Durch die erfindungsgemäß eingesetzte Selbstverstärkungsanordnung, die die vom elektrischen Aktuator erzeugte Betätigungskraft ohne eine Einleitung von Hilfskräften auf rein mechanischem Wege verstärkt, ist der Anteil der Aktuatorkraft, der zum Hervorrufen einer gewünschten Reibkraft erforderlich ist und der bei herkömmlichen elektromechanischen Bremsen 100 % beträgt, drastisch verringert. Der größte Teil der erforderlichen Kraft wird erfindungsgemäß von der Selbstverstärkungsanordnung aufgebracht, so daß es beispielsweise ohne weiteres möglich ist, die vom Aktuator zu erzeugende Betätigungskraft im Normalbetrieb der Bremse auf etwa 2 % des bisher üblichen Wertes zu drücken. Im selben Maße sinkt der Energiebedarf einer erfindungsgemäßen Bremse. Es können somit deutlich kleinere und damit leichtere und auch billigere Elektromotoren als Aktuator eingesetzt werden, die zudem den Vorteil einer gesteigerten Dynamik aufweisen.

Sogenannte selbstverstärkende Bremsen sind von früher her insbesondere aus dem Bereich der Trommelbremsen für Kraftfahrzeuge bekannt. Selbstverstärkende Bremsen haben allerdings den Nachteil, daß ihr Reibwert mit zunehmender Aktuatorkraft überproportional zunimmt. Da bei herkömmlichen hydraulischen Bremssystemen die Verteilung der Bremskraft an den einzelnen Radbremszylindern durch den Druck in den Bremsleitungen und die Fläche der Hydraulikkolben festgelegt ist, führen die in der Realität vorhandenen unterschiedlichen Reibwerte zwischen den Reibbelägen der Bremse und der abzubremsenden Bremsscheibe oder Bremstrommel beim Einsatz selbstverstärkender Bremsen zwangsläufig zu stark unterschiedlichen Bremskräften an den einzelnen Rädern eines Fahrzeugs. Der Fahrzeugführer bemerkt dies durch ein beim Bremsen schief ziehendes, d.h. seine Fahrtrichtung ungewollt veränderndes Fahrzeug. Insbesondere auf rutschiger Fahrbahnoberfläche kann dies dazu führen, daß das betreffende Fahrzeug ins Schleudern gerät. Selbstverstärkende Bremsen werden wegen dieser mit ihnen verbundenen Nachteile deshalb schon seit längerer Zeit im Kraftfahrzeugbereich als Betriebsbremse nicht mehr eingesetzt.

Die vorliegende Erfindung überwindet das im Laufe der Zeit herausgebildete Vorurteil der Fachwelt und macht sich den Umstand zunutze, daß bei elektromechanischen Bremsen aufgrund ihres mehrgliedrigen, relativ komplexen Antriebsstranges, der einen Motor und nachgeschaltete Übertragungselemente einschließlich der zugehörigen Lager sowie eventuell zusätzlich ein Getriebe umfaßt, im allgemeinen eine Sensorik zur Kraft - bzw. Momentenmessung und/oder zur Positionsmessung vorhanden ist, um eine gewünschte Bremskraftverteilung zu erreichen. Diese bereits vorhandene Sensorik kann erfindungsgemäß ohne Änderungen dazu verwendet werden, den bereits genannten Soll-/Istwertvergleich bezüglich der Reibkraft durchzuführen, um bei einer entsprechenden Differenz, die beispielsweise von einem mit der Sensorik gekoppelten elektronischen Steuergerät erkannt wird, den elektrischen Aktuator im Sinne einer Angleichung des Istwertes an den Sollwert der Reibkraft anzusteuern. Die Ermittlung des Istwertes der Reibkraft kann dabei in bekannter Weise durch direkte oder indirekte Messung erfolgen.

Die erfindungsgemäße elektromechanische Bremse ermöglicht es aufgrund ihres gegenüber herkömmlichen elektromechanischen Bremsen deutlich verbesserten dynamischen Verhaltens, das aus den erheblich niedrigeren aufzubringenden Aktuatorkräften resultiert, den Vorteil einer Selbstverstärkungsanordnung ohne den bisher damit verbundenen Nachteil zu nutzen, indem Reibwertschwankungen zwischen einem Reibglied und dem abzubremsenden Bauteil der Bremse so schnell ausgeregelt werden, daß sie beispielsweise das Fahrverhalten eines Kraftfahrzeuges nicht nachteilig beeinflussen.

Gemäß einer Ausführungsform wird der Steigungswinkel α derart festgelegt, daß eine mittels des elektrischen Aktuators in die Selbstverstärkungsanordnung eingeleitete Eingangskraft unabhängig von einem sich ändernden Reibwert zwischen dem Reibglied und dem abzubremsenden Bauteil bezogen auf die üblicherweise vorherrschende Drehrichtung des abzubremsenden Bauteiles stets positiv ist. Man spricht in diesem Zusammenhang auch von einem Druckkeil, denn das Maß der Selbstverstärkung ist durch die Wahl des Steigungswinkels α nur so groß bemessen, daß unabhängig von einem sich ändernden Reibwert μ in allen Betriebszuständen der Bremse eine Druckkraft auf den Keil ausgeübt werden muß, um die gewünschte Reibkraft zu erzielen. Die Druckkraft wird dabei von dem elektrischen Aktuator aufgebracht. Beim Einsatz einer solchen Druckkeilanordnung kann der Energiebedarf einer erfindungsgemäßen elektromechanischen Bremse je nach Ausführung, d.h. je nach Wahl des Steigungswinkels α, im Normalbetrieb auf bis zu 2 % und im Fadingbetrieb auf etwa 17 % des Energiebedarfes einer herkömmlichen elektromechanischen Bremse ohne Selbstverstärkungsanordnung gesenkt werden.

Mit Fadingbetrieb ist hier derjenige Zustand gemeint, in den eine Bremse gerät, wenn es bei extrem starker Bremskraft durch temperaturbedingte Ausgasungen der Bremsbeläge zu einem Absinken des Reibwertes kommt. Das sogenannte Bremsfading tritt bei Kraftfahrzeugbremsen insbesondere nach mehrmaligem aufeinanderfolgenden Abbremsen aus hoher Geschwindigkeit oder bei längeren Paßabfahrten im Gebirge auf.

Gemäß einer anderen Ausführungsform der erfindungsgemäßen Bremse ist der Steigungswinkel α derart gewählt, daß eine mittels des elektrischen Aktuators in die Selbstverstärkungsanordnung eingeleitete Eingangskraft unabhängig von einem sich ändernden Reibwert zwischen dem Reibglied und dem abzubremsenden Bauteil, wiederum bezogen auf die üblicherweise vorherrschende Drehrichtung des abzubremsenden Bauteiles, stets negativ ist, wobei bei dieser Ausführungsform der gesamte Antriebsstrang zwischen dem elektrischen Aktuator und der Selbstverstärkungsanordnung in Richtung der negativen Eingangskraft vorgespannt ist. Im Gegensatz zur soeben erläuterten Druckkeilanordnung spricht man bei einer stets negativen Eingangskraft von einer Zugkeilanordnung, d.h. es muß auf den Keil in jedem Betriebszustand der Bremse eine Zugkraft ausgeübt werden. Erreicht wird dies durch eine entsprechende Wahl des Steigungswinkels α, der gegenüber einer Druckkeilanordnung kleiner ist. Der Vorteil einer Zugkeilanordnung liegt in einer verbesserten Regelbarkeit der Bremse im Normalbetrieb, da die Bremse sich in diesem Zustand durch den geringeren Verstärkungsfaktor stabiler verhält. Erkauft wird dieser Vorteil allerdings durch einen im Verhältnis zur Druckkeilanordnung relativ hohen Energiebedarf im Normalbetrieb.

Im Fadingbetrieb sinkt bei einer Zugkeilanordnung aufgrund des durch den absinkenden Reibwert μ ansteigenden Verstärkungsfaktors die aufzubringende Zugkraft stark ab und es wird in diesem Zustand somit nur sehr wenig Aktuatorkraft benötigt, um die erforderliche Reibkraft zu erzeugen.

Sowohl die Druckkeilanordnung als auch die Zugkeilanordnung haben den Vorteil, daß im gesamten Betriebsbereich der Bremse ein Lastwechsel im Antriebsstrang ausgeschlossen ist. Bei der Zugkeilanordnung ist es zur Vermeidung jeglichen Lastwechsels im Antriebsstrang jedoch zusätzlich notwendig, den Antriebsstrang wie angegeben vorzuspannen.

Bei einem bevorzugten Ausführungsbeispiel der erfindungsgemäßen Bremse ist das abzubremsende Bauteil eine Bremsscheibe und die Selbstverstärkungsanordnung weist einen Trägerring auf, der parallel und koaxial mit Abstand zur Bremsscheibe angeordnet ist. Dieser Trägerring ist auf seiner von der Bremsscheibe abgewandten Seite mit einer Reihe von Keilen versehen, die jeder eine erste Fläche mit einem Steigungswinkel α zum Abstützen an je einem drehbar gelagerten Bolzen definieren.

Gemäß einer Weiterbildung dieser Bremse sind alle Bolzen in einem koaxial zum Trägerring angeordneten, ringförmigen Bolzenträger gelagert, wobei die Drehachsen aller Bolzen rechtwinklig zur Drehachse der Bremsscheibe ausgerichtet sind und wobei der Trägerring und der Bolzenträger relativ zueinander um die Drehachse der Bremsscheibe verdrehbar sind. Durch Verdrehen des Bolzenträgers und des Trägerringes relativ zueinander laufen Keile und Bolzen aneinander auf, so daß der axiale Abstand zwischen dem Trägerring und dem Bolzenträger sich in Abhängigkeit der vorgenommenen Relativverdrehung und des Steigungswinkels α vergrößert.

In vorteilhafter Weise ist der genannte Trägerring an seinem Innenumfang durch eine Verzahnung als Hohlrad ausgebildet. Die Verbindung zwischen dem elektrischen Aktuator und diesem Hohlrad wird dann bevorzugt durch ein in Eingriff mit der genannten Verzahnung stehendes Abtriebsritzel hergestellt, das von dem elektrischen Aktuator antreibbar ist.

In einer bevorzugten Ausführungsform einer solchen, als Scheibenbremse ausgebildeten erfindungsgemäßen Bremse ist der ringförmige Bolzenträger drehfest angeordnet und der als Hohlrad ausgebildete Trägerring läßt sich mittels des elektrischen Aktuators gegenüber dem Bolzenträger um die Drehachse der Bremsscheibe verdrehen. Alternativ kann aber auch der Trägerring drehfest und der Bolzenträger verdrehbar ausgebildet sein.

Bei einer einen Trägerring umfassenden erfindungsgemäßen Bremse sind auf der der Bremsscheibe zugewandten Seite des Trägerrings vorzugsweise mehrere Reibglieder angeordnet, die mittels der auf der anderen Seite des Trägerrings vorhandenen Keile axial gegen die Bremsscheibe gepreßt werden können. Aus thermischen Gründen sind mehrere, in Umfangsrichtung des Trägerrings mit Abstand voneinander angeordnete Reibglieder zwar bevorzugt, es ist jedoch auch möglich, ein einziges durchgehendes, ringförmiges Reibglied auf dem Trägerring anzuordnen, falls eine größere Reibbelagfläche benötigt wird. Die Reibglieder können entweder unmittelbar mit dem Trägerring verbunden sein, beispielsweise durch Aufkleben, sie können jedoch auch auf separaten Trägerplatten befestigt sein, die dann vorzugsweise leicht auswechselbar an dem Trägerring anbringbar sind.

Die Höhe jedes auf dem Trägerring vorhandenen Keiles in einer Richtung senkrecht zum Trägerring entspricht mit Vorteil zumindest dem gewünschten Zustellhub der Scheibenbremse, d.h. mindestens dem maximal zulässigen Verschleiß der Reibglieder zuzüglich eines Verformungsweges, der an den die Reibglieder tragenden Bremsenbauteilen bei maximaler Beanspruchung auftreten kann. Der Zustellhub kann dann ausschließlich durch die Keilanordnung aufgebracht werden.

Bei einer bevorzugten Ausführungsform der erfindungsgemäßen Bremse mit einem Trägerring ist in Umfangsrichtung desselben jeder Keil unmittelbar anschließend an den vorhergehenden Keil angeordnet. Auf diese Weise sind Leerwege minimiert und es eröffnet sich in vorteilhafter Weise die Möglichkeit, an jedem Keil eine zweite Fläche zum Abstützen an je einem der drehbar gelagerten Bolzen vorzusehen, die entgegengesetzt zur ersten Fläche geneigt ist und einen Steigungswinkel β aufweist, der vorzugsweise größer als der Steigungswinkel α ist. Während bei einer solchen Anordnung die Flächen mit dem Steigungswinkel α beim Abbremsen eines sich in Vorwärtsrichtung bewegenden Fahrzeuges benutzt werden, sind die unter dem Steigungswinkel β geneigten zweiten Flächen zum Abbremsen des Fahrzeuges bei Rückwärtsfahrt gedacht. Ein gegenüber dem Steigungswinkel α größerer Steigungswinkel β verkürzt in platzsparender Weise die Baulänge jedes Keiles und ist bei Rückwärtsfahrt nicht von Nachteil, da die hier benötigte Bremskraft in aller Regel deutlich unterhalb der für Bremsungen in Vorwärtsfahrt benötigten Bremskraft liegt.

Bei bevorzugten Ausführungsformen der erfindungsgemäßen Bremse ist der elektrische Aktuator ein Elektromotor, es sind jedoch auch andere Antriebseinheiten möglich.

Ein Ausführungsbeispiel einer als Scheibenbremse ausgestalteten erfindungsgemäßen elektromechanischen Bremse wird im folgenden anhand der beigefügten, schematischen Figuren, näher erläutert. Es zeigt:

Fig. 1 eine als Scheibenbremse ausgestaltete, erfindungsgemäße elektromechanische Bremse in räumlicher Darstellung, und

Fig. 2 ein Diagramm, welches die Kräfte darstellt, die an Keilen der in Figur 1 dargestellten Bremse wirken.

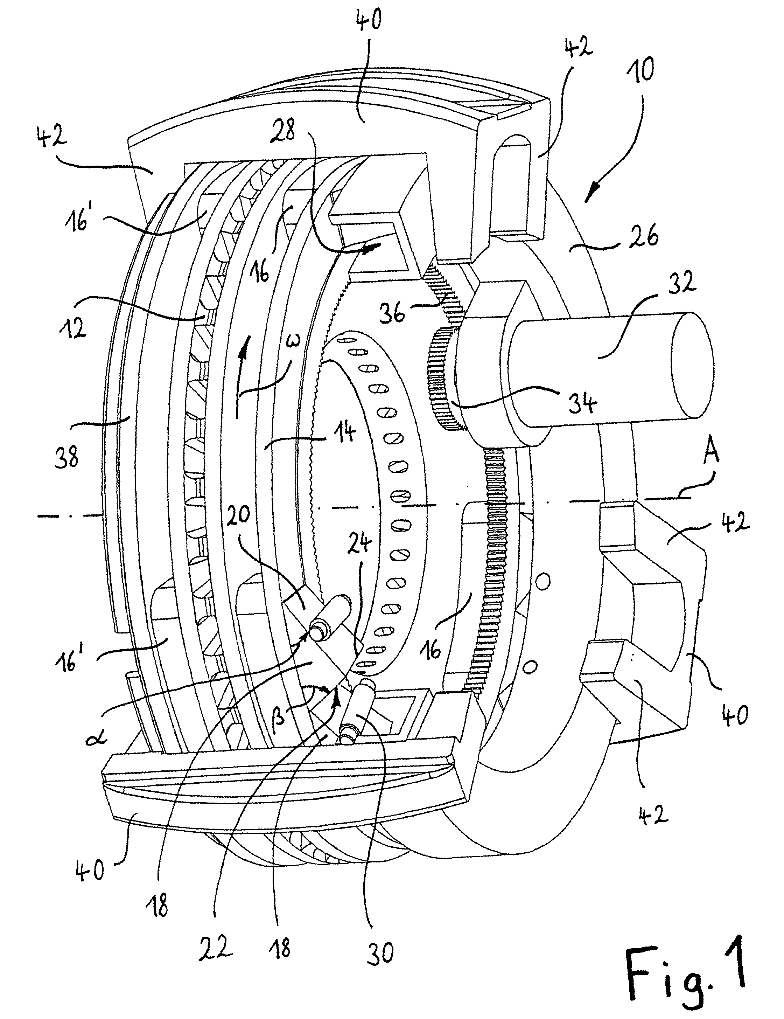

Figur 1 zeigt in räumlicher Darstellung eine Scheibenbremse 10 mit einer hier innenbelüfteten Bremsscheibe 12, die um eine Achse A drehbar ist.

In einem gewissen axialen Abstand von der Bremsscheibe 12 ist parallel zu ihr und koaxial zur Achse A ein erster Trägerring 14 angeordnet, auf dessen der Bremsscheibe 12 zugewandten Seite mehrere Reibglieder 16 befestigt sind, die in einer im folgenden noch näher erläuterten Weise an die Bremsscheibe 12 anlegbar sind, um die zum Abbremsen der Bremsscheibe 12 erforderliche Reibkraft zu erzeugen. Auf der gegenüberliegenden, von der Bremsscheibe 12 abgewandten Seite des ersten Trägerrings 14 sind eine Reihe von Keilen 18 fest angebracht, von denen jeder eine erste Fläche 20 mit einem Steigungswinkel α und eine zweite Fläche 22 mit einem Steigungswinkel β definiert. Bezüglich einer Draufsicht auf den ersten Trägerring 14 erstrecken sich beide Flächen 20, 22 unmittelbar aneinander anschließend im wesentlichen in Umfangsrichtung des Trägerrings 14. Gemäß einer abgewandelten, hier nicht dargestellten Ausführungsform stoßen die beiden Flächen 20, 22 nicht wie in Figur 1 dargestellt an einer gemeinsamen Kante 24 aneinander, sondern haben zwischen sich einen Abschnitt, der sich parallel zum Trägerring 14 erstreckt.

Wie aus Figur 1 ersichtlich, sind die beiden Flächen 20, 22 entgegengesetzt zueinander geneigt, wobei der Steigungswinkel β der zweiten Fläche 22 deutlich größer als der Steigungswinkel α der ersten Fläche 20 ist. Die Keile 18, von denen in Figur 1 der besseren Übersichtlichkeit wegen nur einige dargestellt sind, folgen in Umfangsrichtung des Trägerrings 14 gesehen unmittelbar aufeinander, so daß die gesamte axial äußere Fläche des ersten Trägerrings 14 mit Keilen 18 bedeckt ist. Bei anderen Ausführungsformen, die hier nicht dargestellt sind, kann jedoch zwischen zwei aufeinanderfolgenden Keilen 18 in Umfangsrichtung ein gewisser Abstand bestehen, ebenso braucht nicht die gesamte axial äußere Fläche des Trägerrings 14 von Keilen 18 bedeckt zu sein, sondern die Keile 18 können beispielsweise in Gruppen angeordnet sein, wobei zwischen zwei in Umfangsrichtung aufeinanderfolgenden Gruppen von Keilen ein größerer Abstand besteht. Die Keile 18 können einstückig mit dem ersten Trägerring 14 ausgebildet sein, sie können allerdings auch als separate Teile gefertigt und dann fest mit dem Trägerring 14 verbunden werden.

Axial außerhalb des ersten Trägerrings 14 ist ein ringförmiger Bolzenträger 26 mit etwa U-förmigem Querschnitt angeordnet, der einen ringförmigen und zum Trägerring 14 hin offenen Hohlraum 28 definiert, in den die Keile 18 hineinragen. In diesem ringförmigen Hohlraum 28 ist eine der Anzahl der Keile 18 entsprechende Anzahl von Bolzen 30 drehbar gelagert, von denen in Figur 1 nur zwei dargestellt sind. Die Drehachsen der zum Zusammenwirken mit den Keilen 18 vorgesehenen Bolzen 30 sind bei diesem Ausführungsbeispiel normal zur Achse A ausgerichtet. Bei dem in Figur 1 dargestellten Ausführungsbeispiel ist jeder Bolzen 30 durch eine Hülse gebildet, die drehbar auf einer drehfest im Bolzenträger 26 angeordneten Achse angeordnet ist.

An der radial inneren Umfangsfläche des Bolzenträgers 26 ist ein Elektromotor 32 befestigt, der als elektrischer Aktuator der Scheibenbremse 10 dient und der ein Abtriebsritzel 34 aufweist, das mit einer am radial inneren Umfang des ersten Trägerrings 14 ausgebildeten Verzahnung 36 in Eingriff ist. Falls erforderlich, kann zwischen dem Elektromotor 32 und dem Abtriebsritzel 34 ein hier nicht dargestelltes Getriebe angeordnet sein.

Auf der dem ersten Trägerring 14 gegenüberliegenden Seite der Bremsscheibe 12 ist mit axialem Abstand zu dieser ein zweiter Trägerring 38 ebenfalls parallel zur Bremsscheibe 12 und koaxial zur Achse A angeordnet. Dieser zweite Trägerring 38 ist auf seiner der Bremsscheibe 12 zugewandten Seite mit Reibgliedern 16' versehen, die an mit den Reibgliedern 16 zumindest im wesentlichen übereinstimmenden Stellen am zweiten Trägerring 38 befestigt sind und die sich beim Bremsvorgang ebenfalls an die Bremsscheibe 12 anlegen.

In einem radial äußeren Bereich der Scheibenbremse 10 sind mehrere (hier drei) Sättel 40 angeordnet, die den Bolzenträger 26, den ersten Trägerring 14, die Bremsscheibe 12 und den zweiten Trägerring 38 übergreifen und sich mit radial nach innen ragenden Armen 42 einerseits an der axial äußeren Stirnfläche des Bolzenträgers 26 und andererseits an der axial äußeren Stirnfläche des zweiten Trägerrings 38 oder einem damit verbundenen Glied abstützen.

Es wird nun die Funktion der dargestellten Scheibenbremse 10 erläutert, wobei davon ausgegangen wird, daß sich die Bremsscheibe 12 in Richtung des Pfeils ω dreht. Diese Drehrichtung entspricht bei einer in ein Fahrzeug eingebauten Scheibenbremse 10 einer Vorwärtsfahrt. Zum Einleiten einer Bremsung wird der Elektromotor 32 bestromt und treibt daraufhin das Abtriebsritzel 34 derart an, daß sich der erste Trägerring 14 um einen Winkel φ in Drehrichtung ω gegenüber dem drehfesten Bolzenträger 26 verdreht. Dies führt dazu, daß die ersten Flächen 20 der Keile 18 auf die zugehörigen Bolzen 30 auflaufen, wodurch der erste Trägerring 14 axial zur Bremsscheibe 12 hin verschoben wird, so daß die Reibglieder 16 sich an die Bremsscheibe 12 anlegen. Das Maß s der Axialverschiebung des Trägerrings 14 bestimmt sich dabei nach der Formel

$$s = \varphi/(2\,\pi * P)$$

wobei φ der Drehwinkel und P die sich aus dem Steigungswinkel α ergebende Steigung der ersten Fläche 20 ist.

Nachdem sich die Reibglieder 16 an die Bremsscheibe 12 angelegt haben, bewirkt die entstehende Reaktionskraft über die Reibglieder 16, den ersten Trägerring 14, den Bolzenträger 26 und die Sättel 40 auch eine Axialverschiebung des zweiten Trägerrings 38 zur Bremsscheibe 12 hin, so daß sich die Reibglieder 16' nahezu ohne Verzögerung ebenfalls an die Bremsscheibe 12 anlegen (Schwimmsattelprinzip).

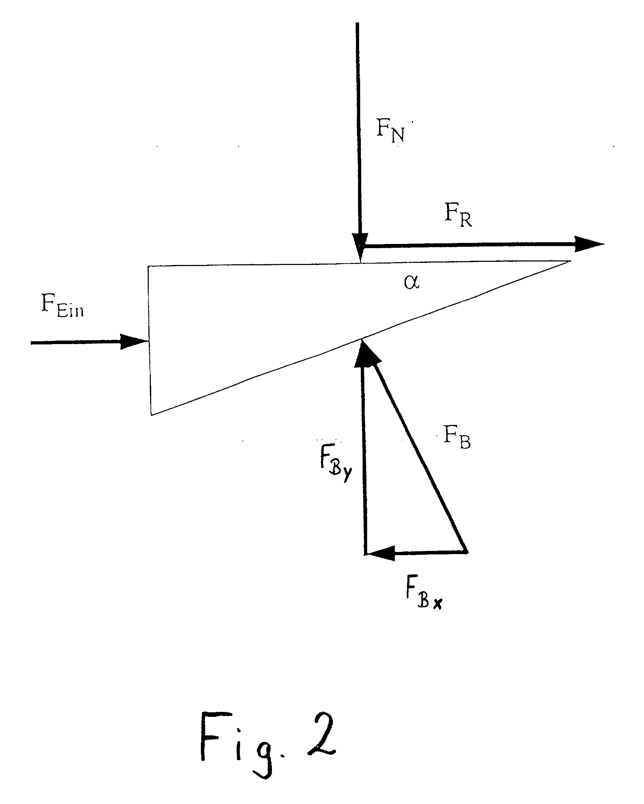

Die mit den Bolzen 30 zusammenwirkenden Keile 18 stellen eine Selbstverstärkungsanordnung dar, d.h. die vom Elektromotor 32 über das Abtriebsritzel 34 in die Scheibenbremse 10 eingeleitete Betätigungskraft wird selbsttätig und ohne weitere, von außen einzubringende Kräfte verstärkt. Zur Erläuterung der selbstverstärkenden Wirkung ist in Figur 2 das Kräftegleichgewicht an einem schematisch dargestellten Keil 18 wiedergegeben.

Dabei ist

$F_{Ein}$     die in den Keil 18 eingeleitete Eingangskraft,

$F_B$     die sich bei einer Bremsung ergebende, vom Bolzen 30 abzustützende Auflagerkraft, die sich in eine der Eingangskraft $F_{Ein}$ entgegengesetzte Kraft $F_{Bx}$ und eine senkrecht zur Bremsscheibe stehende Druckkraft $F_{By}$ aufteilen läßt,

$F_N$     die der Kraft $F_{By}$ entgegengerichtete Normalkraft an der Bremsscheibe, und

$F_R$     die am Keil bzw. am Reibglied entstehende Reibkraft.

Gemäß diesem Kräftegleichgewicht hängt die Reibkraft bzw. das Reibmoment an der Bremsscheibe entsprechend der Beziehung

$$F_{Ein} = -F_R \bullet \left[ 1 - \frac{\tan \alpha}{\mu} \right]$$

lediglich vom Steigungswinkel α, dem eine Störgröße darstellenden Reibwert μ und der Eingangskraft $F_{Ein}$ ab.

Der Reibwert μ kann sich in Abhängigkeit der Belastung der Bremse relativ stark ändern. Jede Reibwertänderung während eines Bremsvorgangs führt jedoch zu einer Änderung der Reibkraft $F_R$ und somit zu einer sich ändernden Verzögerung des abzubremsenden Bauteiles der Bremse, welches vorliegend durch die Bremsscheibe 12 gebildet ist. Um diese unerwünschten Reibwertänderungen auszuregeln, ist die dargestellte Scheibenbremse 10 mit einer nicht gezeigten Sensorik versehen, die eine ständige Messung der Reibkraft gestattet. Diese an sich bekannte Sensorik ist mit einem nicht dargestellten, elektronischen Steuergerät verbunden, das die erhaltenen Signale auswertet, und insbesondere einen Vergleich zwischen einem vorgegebenen Sollwert der Reibkraft und dem tatsächlichen Istwert der Reibkraft vornimmt. Entsprechend dieser Auswertung der Signale wird der Elektromotor 32 von dem Steuergerät so angesteuert, daß durch Verdrehen des ersten Trägerrings 14 in oder entgegen der Drehrichtung ω eine Erhöhung oder Erniedrigung des Istwertes der Reibkraft erreicht wird, um den Istwert an den Sollwert heranzuführen.

Entscheidend für eine gute Regelbarkeit des Systems ist, daß die Steigung P der ersten Flächen 20 der Keile 18 so gewählt wird, daß im Kraftfluß zwischen dem Elektromotor 32 und den Keilen 18 kein Lastwechsel auftreten kann, und zwar weder beim Beginn einer Bremsung noch beim Übergang der Bremse in einen sogenannten Fadingbetrieb, der bei hoher Bremsbelastung und entsprechend heißer Bremsscheibe 12 und heißen Reibgliedern 16, 16' auftritt.

Die Forderung der Lastwechselfreiheit wird erreicht, indem der Steigungswinkel α so gewählt wird, daß über den gesamten Betriebsbereich zwischen dem Motor 32 und dem Trägerring 14 hinsichtlich der Eingangskraft $F_{Ein}$ entweder nur Zugkräfte oder nur Druckkräfte auftreten, d.h. daß die Eingangskraft $F_{Ein}$ im gesamten Betriebsbereich entweder positiv oder aber negativ bleibt. Aufgrund des sich ändernden Reibwertes μ wäre bei bestimmten Steigungswinkeln α nämlich ein Vorzeichenwechsel der Eingangskraft $F_{Ein}$ möglich, der zu unerwünschten Bewegungen im Antriebsstrang führt, weil dann das im Antriebsstrang vorhandene Spiel durchfahren wird und hierdurch nur schwer zu regelnde Kraftsprünge auftreten können.

Um einen Lastwechsel im Antriebsstrang auszuschließen, muß sichergestellt sein, daß im gesamten Betriebsbereich entweder

$$1 - \frac{\tan \alpha}{\mu} < 0$$

gilt, was zu einer im gesamten Betriebsbereich positiven Eingangskraft $F_{Ein}$ führt, weshalb eine solche Anordnung auch als Druckkeilanordnung bezeichnet wird, oder daß im gesamten Betriebsbereich gilt

$$1 - \frac{\tan \alpha}{\mu} > 0$$

was zu einer im gesamten Betriebsbereich negativen Eingangskraft $F_{Ein}$ führt, weshalb eine solche Anordnung auch als Zugkeilanordnung bezeichnet wird.

Wird der Steigungswinkel α so gewählt, daß die Eingangskraft $F_{Ein}$ stets negativ ist (Zugkeilanordnung; $F_{By} < F_R$), so hat dies folgende Konsequenzen:

1. Bei normalem Reibwert μ der Reibglieder ist die vom Elektromotor 32 aufzubringende Eingangskraft $F_{Ein}$ relativ hoch, so daß entsprechend der Energiebedarf des Elektromotors 32 im Normalbetrieb relativ hoch ist. Dennoch ist auch dann der Energiebedarf des Elektromotors 32 gegenüber einer herkömmlichen elektromechanisch betätigten Scheibenbremse um bis zu 80 % und mehr vermindert.

2. Im Fadingbetrieb, d.h. bei absinkendem Reibwert μ, sinkt gemäß den obenstehenden Beziehungen die vom Elektromotor 32 aufzubringende Zugkraft stark ab und es wird demzufolge sehr wenig Motorleistung und Motormoment benötigt, um die erforderliche Reibkraft $F_R$ zu erzeugen. Gegenüber einer herkömmlichen Anordnung ist somit der Energiebedarf des Elektromotors 32 je nach Wahl des Steigungswinkels α um mehr als 95 % reduziert.

Der Vorteil einer Zugkeilanordnung ist in der verbesserten Regelbarkeit der Bremse im Normalbetrieb zu sehen, weil sich das System aufgrund des dann geringeren Verstärkungsfaktors stabiler verhält. Erkauft wird dieser Vorteil mit einem etwas höheren Energiebedarf im Normalbetrieb der Bremse.

Wird der Steigungswinkel α hingegen so gewählt, daß die Eingangskraft $F_{Ein}$ stets positiv ist (Druckkeilanordnung; $F_{By} > F_R$), ergibt sich folgendes:

1. Bei normalem Reibwert der Reibglieder ist die vom Elektromotor 32 aufzubringende Druckkraft $F_{Ein}$ theoretisch beliebig gering. In der Praxis kann allerdings aus Gründen der Regelbarkeit (zu hoher Verstärkungsfaktor, Einfluß von Störgrößen usw.) diese Druckkraft nicht zu gering gewählt werden. Dennoch ist im Normalbetrieb der Bremse die vom Elektromotor 32 benötigte Energie gegenüber einer herkömmlichen elektromechanischen Bremse ohne Selbstverstärkungsanordnung um 90, 95 und mehr Prozent vermindert.

2. Im Fadingbetrieb steigt die vom Elektromotor 32 aufzubringende Druckkraft $F_{Ein}$ an und es wird demzufolge mehr Motorleistung und Motormoment benötigt, um die erforderliche Reibkraft $F_R$ zu erzeugen.

Der Vorteil einer solchen Druckkeilanordnung ist darin zu sehen, daß der Elektromotor 32, der für den höheren Kraftbedarf des Fadingbetriebes ausgelegt sein muß, im Normalbetrieb erhebliche Drehmoment- und Kraftreserven aufweist, woraus sich im Normalbetrieb hervorragende dynamische Eigenschaften ergeben.

Bei der Erläuterung des weiter oben beschrieben Bremsvorganges mittels der dargestellten Scheibenbremse 10 wurde von einer Druckkeilanordnung ausgegangen, d.h. die Keile 18 drücken aufgrund einer entsprechenden Verdrehung des ersten Trägerrings 14 gegen die Bolzen 30. Bei einer Zugkeilanordnung, vorgegeben durch die entsprechende Wahl des Steigungswinkels α, müßte der Elektromotor 32 in entgegengesetzter Richtung drehen. Die bei einer Zugkeilanordnung zum Vorspannen des Antriebsstranges notwendige Einrichtung ist in Fig.1 nicht dargestellt.

Zum Beenden einer eingeleiteten Bremsung wird der Elektromotor 32 derart angesteuert, daß sich das Abtriebsritzel 34 entgegen der Drehrichtung beim Betätigen dreht, so daß der erste Trägerring 14 wieder in seine Ausgangsstellung zurückgeführt wird, d.h. die ersten Flächen 20 der Keile 18 laufen an den Bolzen 30 herunter und der Trägerring 14 bewegt sich axial von der Bremsscheibe 12 weg.

Zum Abbremsen beispielsweise eines Fahrzeuges auch in Rückwärtsfahrt besitzen die Keile 18 die zweite Fläche 22 mit dem Steigungswinkel β. Der Steigungswinkel β dieser Flächen 22 kann deutlich größer als der Steigungswinkel α der ersten Flächen 20 gewählt werden, da bei Rückwärtsfahrt üblicherweise keine so hohen Reibkräfte benötigt werden. Zwar hat der gegenüber dem Steigungswinkel α größere Steigungswinkel β bei Bremsungen in Rückwärtsfahrt einen erhöhten Energiebedarf des Elektromotors 32 zur Folge, jedoch wirkt sich dieser Umstand wegen der normalerweise nur geringen erforderlichen Bremskraft bei Bremsungen in Rückwärtsfahrt nicht nachteilig aus.

Dreht sich also die Bremsscheibe 12 entgegen des Pfeiles ω (Rückwärtsfahrt), wobei der Drehrichtungswechsel beispielsweise durch die Sensorik einer heutzutage meistens vorhandenen ABS-Anlage erkannt werden kann, wird der erste Trägerring 14 mit Hilfe des Elektromotors 32 so verdreht, daß die zweiten Flächen 22 auf den Bolzen 30 auflaufen. Der Bremsvorgang läuft dann wie zuvor beschrieben ab.

Alternativ ist es auch möglich, die Bremsung bei Rückwärtsfahrt mittels der ersten Flächen 20 auszuführen. Hierzu muß der Elektromotor 32 jedoch ausreichende Kraft- bzw. Drehmomentreserven besitzen (insbesondere bei einer Druckkeilanordnung, d.h. bei großem Steigungswinkel α), da die Anordnung aus Keilen 18 und Bolzen 30 dann selbstschwächend wirkt, so daß der Elektromotor 32 die erforderliche Reibkraft vollständig selbst aufbringen muß.

Obwohl die zuvor näher erläuterte Bremse als Scheibenbremse ausgestaltet ist, ist auch eine Ausführung als Trommelbremse möglich, wobei die Keile 18 dann beispielsweise auf der radial inneren Seite der Trommelbremsbacken angeordnet sein können. Des weiteren kann die selbstverstärkende Wirkung auf andere Weise als mit Keilen erzielt werden, beispielsweise mit Viergelenken.

**Patentansprüche**

1. Elektromechanische Bremse (10), insbesondere für Fahrzeuge, mit einem elektrischen Aktuator, der eine Betätigungskraft erzeugt und auf zumindest ein Reibglied (16) wirkt, um dieses zum Hervorrufen einer Reibkraft gegen ein drehbares, abzubremsendes Bauteil der Bremse zu drücken, wobei zwischen dem abzubremsenden Bauteil und dem elektrischen Aktuator eine Anordnung vorhanden ist, die zur Selbstverstärkung der vom elektrischen Aktuator erzeugten Betätigungskraft führt und wenigstens einen Keil (18) mit einem Steigungswinkel α aufweist, und wobei eine Einrichtung zum Vergleichen eines Sollwertes der Reibkraft mit dem Istwert der Reibkraft vorhanden ist, die bei einer Abweichung des Istwertes vom Sollwert den elektrischen Aktuator zum entsprechenden Erhöhen oder Verringern der erzeugten Betätigungskraft ansteuert und so den Istwert dem Sollwert der Reibkraft angleicht,
**dadurch gekennzeichnet, daß** der Keil (18) sich gleitend oder rollend an einem zugehörigen Widerlager abstützt, derart, daß eine mittels des elektrischen Aktuators in die Selbstverstärkungsanordnung eingeleitete Eingangskraft $F_{Ein}$ und eine sich bei einer Bremsung ergebende Auflagerkraft $F_B$ auf voneinander verschiedene Flächen des Keils (18) wirken.

2. Bremse nach Anspruch 1,
**dadurch gekennzeichnet, daß** der Steigungswinkel α derart gewählt ist, daß eine mittels des elektrischen Aktuators in die Selbstverstärkungsanordnung eingeleitete Eingangskraft $F_{Ein}$ unabhängig von einem sich ändernden Reibwert μ zwischen dem Reibglied und dem abzubremsenden Bauteil - bezogen auf die üblicherweise vorherrschende Drehrichtung des abzubremsenden Bauteiles - stets positiv ist.

3. Bremse nach Anspruch 1,
**dadurch gekennzeichnet, daß** der Steigungswinkel α derart gewählt ist, daß eine mittels des elektrischen Aktuators in die Selbstverstärkungsanordnung eingeleitete Eingangskraft $F_{Ein}$ unabhängig von einem sich ändernden Reibwert μ zwischen dem Reibglied (16) und dem abzubremsenden Bauteil - bezogen auf die üblicherweise vorherrschende Drehrichtung des abzubremsenden Bauteiles - stets negativ ist, und daß der gesamte Antriebsstrang zwischen dem elektrischen Aktuator und der Selbstverstärkungsanordnung in Richtung der negativen Eingangskraft $F_{Ein}$ vorgespannt ist.

4. Bremse nach einem der vorhergehenden Ansprüche,
**dadurch gekennzeichnet, daß** das abzubremsende Bauteil eine Bremsscheibe (12) ist, und daß die Selbstverstärkungsanordnung einen Trägerring (14) aufweist, der parallel und koaxial zur Bremsscheibe (12) angeordnet ist und auf seiner von der Bremsscheibe (12) abgewandten Seite mit einer Reihe von Keilen (18) versehen ist, die jeder eine erste Fläche (20) mit einem Steigungswinkel α zum Abstützen an je einem drehbar gelagerten Bolzen (30) definieren.

5. Bremse nach Anspruch 4,
**dadurch gekennzeichnet, daß** alle Bolzen (30) in einem koaxial zum Trägerring (14) angeordneten, ringförmigen Bolzenträger (26) gelagert sind, wobei die Drehachsen aller Bolzen (30) rechtwinklig zur Drehachse der Bremsscheibe (12) ausgerichtet sind und wobei der Trägerring (14) und der Bolzenträger (26) relativ zueinander um die Drehachse der Bremsscheibe (12) verdrehbar sind.

6. Bremse nach Anspruch 4 oder 5,
**dadurch gekennzeichnet, daß** der Trägerring (14) an seinem Innenumfang mittels einer Verzahnung (36) als Hohlrad ausgebildet ist.

7. Bremse nach Anspruch 6,
**dadurch gekennzeichnet, daß** ein von dem elektrischen Aktuator angetriebenes Abtriebsritzel (34) im Eingriff mit der Verzahnung (36) ist.

8. Bremse nach Anspruch 6 und 7,
**dadurch gekennzeichnet, daß** der Trägerring (14) mittels des elektrischen Aktuators gegenüber dem ringförmigen Bolzenträger (26) um die Drehachse der Bremsscheibe (12) verdrehbar ist.

9. Bremse nach einem der Ansprüche 4 bis 8,
**dadurch gekennzeichnet, daß** auf der der Bremsscheibe (12) zugewandten Seite des Trägerrings (14) vorzugsweise mehrere Reibglieder (16) angeordnet sind.

10. Bremse nach einem der Ansprüche 4 bis 9,
**dadurch gekennzeichnet, daß** die Höhe jedes Keiles (18) senkrecht zum Trägerring (14) zumindest dem gewünschten Zustellhub einer die Bremsscheibe (12) umfassenden Scheibenbremse (10) entspricht.

11. Bremse nach einem der Ansprüche 4 bis 10,
**dadurch gekennzeichnet, daß** in Umfangsrichtung des Trägerrings (14) jeder Keil (18) unmittelbar auf den vorhergehenden Keil (18) folgt.

12. Bremse nach einem der Ansprüche 4 bis 11,
**dadurch gekennzeichnet, daß** jeder Keil (18) eine zweite Fläche (22) zum Abstützen an je einem der drehbar gelagerten Bolzen (30) definiert, die entgegengesetzt zur ersten Fläche (20) geneigt ist und einen Steigungswinkel β aufweist, der vorzugsweise größer als der Steigungswinkel α ist.

13. Bremse nach einem der vorhergehenden Ansprüche,
**dadurch gekennzeichnet, daß** der elektrische Aktuator ein Elektromotor (32) ist.

**Claims**

1. Electromechanical brake (10), in particular for vehicles, comprising an electric actuator which generates an actuation force and acts on at least one frictional element (16) in order to press it, for producing a frictional force, against a rotatable component of the brake which is to be braked,
wherein between the component to be braked and the electric actuator there is an arrangement which causes self-energization of the actuation force generated by the electric actuator, which self-energization arrangement has at least one wedge (18) with an angle of inclination α, and wherein means for comparing a setpoint value of the frictional force with the actual value of the frictional force, which means, in the event of a deviation of the actual value from the setpoint value, drives the electric actuator in order to correspondingly increase or decrease the generated actuation force, and thus approximates the actual value to the setpoint value of the frictional force,
**characterised in that** the wedge is supported in a sliding or rolling fashion by an associated abutment such that an input force $F_{Ein}$ introduced into the self-energizing arrangement by means of the electric actuator and a supporting force $F_B$ resulting during a braking operation act on different surfaces of the wedge (18).

2. Brake according to Claim 1,
**characterized in that** the angle of inclination α is selected such that an input force $F_{Ein}$ which is introduced into the self-energization arrangement by means of the electric actuator is - with respect to the normally prevailing direction of rotation of the component to be braked - always positive, irrespective of a changing coefficient of friction μ between the frictional element and the component to be braked.

**3.** Brake according to Claim 1, **characterized in that** the angle of inclination $\alpha$ is selected such that an input force $F_{Ein}$ which is introduced into the self-energization arrangement by means of the electric actuator is - with respect to the usually prevailing direction of rotation of the component to be braked - always negative irrespective of a changing coefficient of friction $\mu$ between the frictional element and the component to be braked, and **in that** the entire drive train between the electric actuator and the self-energization arrangement is prestressed in the direction of the negative input force $F_{Ein}$.

**4.** Brake according to one of the preceding claims, **characterized in that** the component to be braked is a brake disc (12) and **in that** the self-energization arrangement has a carrier ring (14) which is arranged parallel to and coaxial with the brake disc (12) and is provided on its side facing away from the brake disc (12) with a series of wedges (18) which each define a first face (20) with an angle of inclination $\alpha$ to be supported on, in each case, one rotatably mounted bolt (30).

**5.** Brake according to Claim 4, **characterized in that** all the bolts (30) are mounted in an annular bolt carrier (26) which is arranged coaxially with respect to the carrier ring (14), the axes of rotation of all the bolts (30) being aligned at right angles to the axis of rotation of the brake disc (12), and the carrier ring (14) and the bolt carrier (26) being rotatable relative to one another about the axis of rotation of the brake disc (12).

**6.** Brake according to Claim 4 or 5, **characterized in that** the carrier ring (14) is designed as an internal gear on its internal circumference by means of a toothing (36).

**7.** Brake according to Claim 6, **characterized in that** a drive pinion (34) driven by the electric actuator is in engagement with the toothing (36).

**8.** Brake according to Claim 6 and 7, **characterized in that** the carrier ring (14) can be rotated with respect to the annular bolt carrier (26) about the axis of rotation of the brake disc (12) by means of the electric actuator.

**9.** Brake according to one of Claims 4 to 8, **characterized in that** preferably a plurality of frictional elements (16) are arranged on the side of the carrier ring (14) facing the brake disc (12).

**10.** Brake according to one of Claims 4 to 9, **characterized in that** the height of each wedge (18) perpendicular to the carrier ring (14) corresponds at least to the desired adjustment travel of a disc brake (10) which includes the brake disc (12).

**11.** Brake according to one of Claims 4 to 10, **characterized in that** each wedge (18) directly follows the preceding wedge (18) in the circumferential direction of the carrier ring (14).

**12.** Brake according to one of Claims 4 to 11, **characterized in that** each wedge (18) defines a second face (22) which is to be supported on, in each case, one of the rotatably mounted bolts (30) and is inclined oppositely to the first face (20) and has an angle of inclination $\beta$ which is preferably greater than the angle of inclination $\alpha$.

**13.** Brake according to one of the preceding claims, **characterized in that** the electric actuator is an electric motor (32).

**Revendications**

**1.** Frein électromécanique (10), en particulier pour véhicule automobile, comportant un actionneur électrique qui génère une force d'actionnement et qui agit sur au moins un organe de friction (16) pour presser celui-ci contre un composant rotatif à freiner du frein dans le but de procurer une force de friction, dans lequel est prévu, entre le composant à freiner et l'actionneur électrique, un agencement qui mène à l'auto-amplification de la force d'actionnement générée par l'actionneur électrique et qui comprend au moins un coin (18) avec un angle de pente $\alpha$, et dans lequel est prévu un dispositif pour comparer une valeur de consigne de la force de friction avec la valeur réelle de la force de friction, lequel pilote, en cas d'écart de la valeur réelle par rapport à la valeur de consigne, l'actionneur électrique pour augmenter ou réduire en correspondance la force d'actionnement générée et qui égalise ainsi la valeur réelle à la valeur de consigne de la force de friction, **caractérisé en ce que** le coin (18) prend appui en glissement ou en roulement sur une contre-butée associée, de telle sorte qu'une force d'entrée $F_{Ein}$ appliquée dans l'agencement d'auto-amplification au moyen de l'actionneur électrique et une force d'appui $F_B$ résultant d'un freinage agissent sur des surfaces du coin (18) qui diffèrent l'une de l'autre.

**2.** Frein selon la revendication 1, **caractérisé en ce que** l'angle de pente $\alpha$ est choisi de telle sorte qu'une force d'entrée $F_{Ein}$ appliquée dans l'agencement d'auto-amplification au moyen de l'actionneur électrique est toujours positive, indépendamment d'un coefficient de friction variable $\mu$ entre l'organe

de friction et le composant à freiner, par rapport à la direction de rotation habituellement présente du composant à freiner.

3. Frein selon la revendication 1, **caractérisé en ce que** l'angle de pente $\alpha$ est choisi de telle sorte qu'une force d'entrée $F_{Ein}$ appliquée dans l'agencement d'auto-amplification au moyen de l'actionneur électrique est toujours négative, indépendamment d'un coefficient de friction variable $\mu$ entre l'organe de friction (16) et le composant à freiner, par rapport à la direction de rotation habituellement présente du composant à freiner, et **en ce que** l'ensemble du mécanisme d'entraînement entre l'actionneur électrique et l'agencement d'auto-amplification est précontraint dans le sens de la force d'entrée négative $F_{Ein}$.

4. Frein selon l'une des revendications précédentes, **caractérisé en ce que** le composant à freiner est un disque de frein (12), et **en ce que** l'agencement d'auto-amplification comprend un anneau porteur (14) qui est agencé parallèlement et coaxialement au disque de frein (12) et qui est pourvu, sur son côté détourné du disque de frein (12), d'une série de coins (18) qui définissent chacun une première surface (20) avec un angle de pente $\alpha$ pour l'appui contre un pivot respectif (30) monté mobile en rotation.

5. Frein selon la revendication 4, **caractérisé en ce que** tous les pivots (30) sont montés dans un porte-pivot annulaire (26) agencé coaxialement à l'anneau porteur (14), les axes de rotation de tous les pivots (30) étant orientés à angle droit par rapport à l'axe de rotation du disque de frein (12), et l'anneau porteur (14) et le porte-pivot (26) étant mobiles en rotation l'un par rapport à l'autre autour de l'axe de rotation du disque de frein (12).

6. Frein selon l'une ou l'autre des revendications 4 et 5, **caractérisé en ce que** sur sa périphérie intérieure l'anneau porteur (14) est réalisé sous forme de roue à denture intérieure présentant une denture (36).

7. Frein selon la revendication 6, **caractérisé en ce qu'**un pignon mené (34) entraîné par l'actionneur électrique est en engrènement avec la denture (36).

8. Frein selon les revendications 6 et 7, **caractérisé en ce que** l'anneau porteur (14) est mobile en rotation par rapport au porte-pivot annulaire (26) autour de l'axe de rotation du disque de frein (12) au moyen de l'actionneur électrique.

9. Frein selon l'une des revendications 4 à 8, **caractérisé en ce qu'**il est prévu sur le côté, tourné vers le disque de frein (12), de l'anneau porteur (14) de préférence plusieurs organes de friction (16).

10. Frein selon l'une des revendications 4 à 9, **caractérisé en ce que** la hauteur de chaque coin (18) perpendiculairement à l'anneau porteur (14) correspond au moins à la course d'approche désirée d'un frein à disque (10) comprenant le disque de frein (12).

11. Frein selon l'une des revendications 4 à 10, **caractérisé en ce qu'**en direction périphérique de l'anneau porteur (14), chaque coin (18) suit immédiatement le coin précédent (18).

12. Frein selon l'une des revendications 4 à 11, **caractérisé en ce que** chaque coin (18) définit une deuxième surface (22) pour l'appui contre un pivot respectif parmi les pivots (30) montés mobiles en rotation, laquelle est inclinée en sens opposé à la première surface (20) et présente un angle de pente $\beta$ qui est de préférence supérieur à l'angle de pente $\alpha$.

13. Frein selon l'une des revendications précédentes, **caractérisé en ce que** l'actionneur électrique est un moteur électrique (32).

Fig. 1

Fig. 2